# EUROPEAN PATENT APPLICATION

(11) **EP 4 660 805 A1**
(43) Date of publication of application: **10.12.2025**
(21) Application number: 24763494.2
(22) Date of filing: 01.02.2024
(51) Int. Cl.: G06F 9/50

(54) **INFORMATION PROCESSING DEVICE, INFORMATION PROCESSING METHOD, AND PROGRAM**

(30) Priority: 27.02.2023 JP 2023028472
(71) Applicant: Morgenrot Inc., Tokyo 102-0083 (JP)
(72) Inventor: MORIMOTO Ryuei, Tokyo 102-0083 (JP); NISHIMOTO Masakazu, Tokyo 102-0083 (JP); NAKAMURA Masamichi, Tokyo 102-0083 (JP); ITO Hiroshi, Tokyo 102-0083 (JP); KOYAMA Saori, Tokyo 102-0083 (JP)
(74) Representative: Appleyard Lees IP LLP
(86) International application number: PCT/JP2024/003343
(87) International publication number: WO 2024/181010

(57) **Abstract**

The objective of the present invention is to distribute jobs efficiently and optimally between a plurality of servers when distributed processing is being performed by the plurality of servers. A job acquiring unit 51 of a distributed processing master server 2 acquires one or more jobs from each of one or more executor terminals 4 operated by a calculation executor. A job allocating unit 52 carries out, as job allocation, processing for allocating the one or more jobs to an allocation destination, where at least some of a plurality of job execution servers 3 serve as the allocation destinations, on the basis of M (M is an integer value less than or equal to N) types of indicators from among N (N is an integer value greater than or equal to 2) types of predetermined indicators. A job transferring unit 53 distributes and transfers the one or more jobs to the allocation destinations in accordance with the job allocation.

## Description

### TECHNICAL FIELD

The present invention relates to an information processing device, an information processing method, and a program.

### BACKGROUND ART

Conventionally, distributed processing which distributes several jobs to be executed by a plurality of servers have been carried out (for example, Patent Document 1).

### Citation List

### Patent Document

Patent Document 1: Japanese Unexamined Patent Application, Publication No. 2020-095340

### DISCLOSURE OF THE INVENTION

### Problems to be Solved by the Invention

However, with the conventional technology including the technology described in Patent Document 1, the situation has been that, in the case of distributed processing being performed by a plurality of servers, it is difficult efficiently and optimally distribute the jobs to this plurality of servers.

The present invention has been made taking account of such a situation, and has an object of efficiently and optimally distributing jobs to a plurality of servers, in the case of distributed processing being performed by a plurality of servers.

### Means for Solving the Problems

In order to achieve the above object, an information processing device according to an aspect of the present invention includes:
a job acquisition means for acquiring, from each of one or more client devices on a client side performing a calculation request for a predetermined job, one or more of the job;
a job allocation means for conducting, as job allocation, processing of defining at least part of a plurality of calculation execution devices as an allocation destination, based on M-types (M is an integer value less than or equal to N) of indicators among N-types (N is an integer value of 2 or more) of predetermined indicators, and allocating the one or more of the job to the allocation destination; and
a job transfer means for distributing and transferring the one or more of the job to the allocation destination in accordance with the job allocation.

An information processing method and a program according to an aspect of the present invention are respectively a method and program corresponding to the information processing system according to the aforementioned aspect of the present invention.

### Effects of the Invention

According to the present invention, in the case of distributed processing being performed by a plurality of servers, it is possible to effectively and optimally distribute jobs to the plurality of servers.

### BRIEF DESCRIPTION OF THE DRAWINGS

FIG. 1 is a view showing a configuration example of a distributed processing system according to an embodiment of an information processing system of the present invention;
FIG. 2 is a block diagram showing an example of a hardware configuration of a distributed processing master server in the distributed processing system of FIG. 1;
FIG. 3 is a functional block diagram showing a functional configuration example of the distributed processing master server of FIG. 2;
FIG. 4 is a view showing a specific example of job allocation by a job allocation unit in FIG. 3;
FIG. 5 shows a specific example of job allocation by the job allocation unit in FIG. 3, which is a different example than FIG. 4;
FIG. 6 shows a specific example of job allocation by the job allocation unit in FIG. 3, which is a different example than FIGS. 4 and 5;
FIG. 7 shows a specific example of job allocation by the job allocation unit in FIG. 3, which is an example different from the example of FIG. 4;
FIG. 8 is a view for explaining features of the distributed processing system of FIG. 1, and explains a conventional distributed processing system; and
FIG. 9 is a view for explaining features of the distributed processing system of FIG. 1 relative to the conventional distributed processing system of FIG. 8.

### PREFERRED MODE FOR CARRYING OUT THE INVENTION

Hereinafter, an embodiment of the present invention will be explained while referencing the drawings as appropriate.

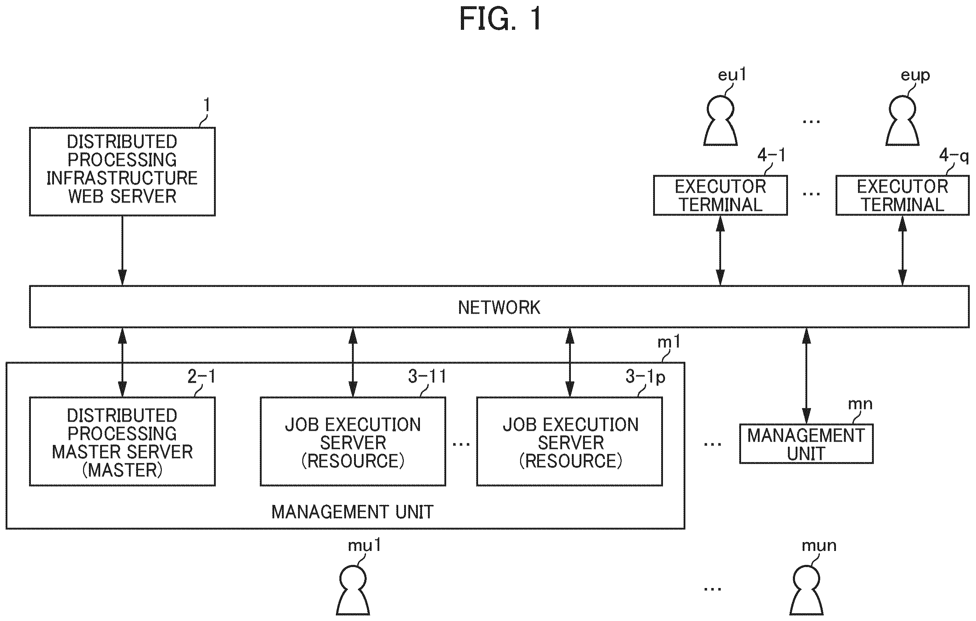

FIG. 1 is a view showing a configuration example of a distributed processing system according to an embodiment of an information processing system of the present invention.

The distributed processing system shown in FIG. 1 is configured by a distributed processing infrastructure web server 1, management units m1 to mn managed by each of n-number (n is an integer value of 1 or more) of managers mu1 to mun, and executor terminals 4-1 to 4-q managed by q-number (q is an integer value of 1 or more) of calculation executors eu1 to euq, being connected to each other via a predetermined network. The management unit mk (k is any integer value among 1 to n) is configured so as to include a distributed processing master server 2-k, and p-number (p is any integer value of 1 or more) of job execution servers 3-k1 to 3-kp.

It should be noted that, in the case of not being necessary to individually distinguish a plurality of units or plurality of individuals, the respective terminology is invoked as follows. In other words, the managers mu1 to mun are collectively called "managers mu". The management units m1 to mn are collectively called "management units m". The distributed processing master servers 2-1 to 2-n are collectively called "distributed processing master servers 2". The job execution servers 3-11 to 3-1p... 3-n1 to 3-np are collectively called "job execution servers 3". The calculation executors eu1 to euq are collectively called "calculation executors eu". The executor terminals 4-1 to 4-q are collectively called "executor terminals 4".

The distributed processing system of FIG. 1 having such a configuration can efficiently and optimally distribute jobs to a plurality of calculation resources, and execute calculations fairly, upon submitting jobs provided from the calculation executors eu. Herein, job refers to arithmetic processing in rendering, machine learning including deep learning, fluid and structural simulation scientific calculation, or a series of such processing.

In addition, the calculation resources to which each job distributed by the distributed processing system of FIG. 1 is respectively allocated are a plurality of the job execution servers 3 installed in physically separated spaces. More specifically, in the distributed processing system of FIG. 1, one or more of the job execution servers 3 are respectively arranged for every plurality of management units m managed by each of the plurality of managers mu. For example, p-number of job execution servers 3-11 to 3-1p are arranged in the management unit m1 managed by the manager mu1. For the plurality of job execution servers 3, so long as IP communication is available such as VPN connection after installation on LAN, server publication on DMZ, the installation location may be anywhere. In other words, the job execution servers 3 are able to be installed flexibly regardless of being on-premise or a cloud. Furthermore, the job execution servers 3 may be machines provided from a third party. Additionally, the job execution server 3 may be a composite of these machines. For example, it may be an execution server 3 configured by only on-premises managed by the manager mu, may be an execution server 3 configured by only an environment established on a cloud, or may be an execution server configured only by a machine provided from a third party. Furthermore, the job execution servers 3 may be execution servers configured by on-premise and cloud machines, may be an execution server configured by machines on-premise and provided from a third party, or may be an execution server 3 configured by machines provided on a cloud and from a third party. In addition, the job execution server 3 may be an execution server 3 configured by machines on-premise, on a cloud and provided from a third party. The on-premise and cloud differ in the cost of management, and the optimal configuration differs according to the application of the manager mu. The appropriateness of whether or not to use a server provided by a third party, varies depending on conditions such as the security policy of the manager mu, the budget, etc. The present invention is able to combine such complex demands and environments to establish a job execution server 3 without imposing a burden on the user. This matter is realized by the distributed processing infrastructure web server, etc. described below. According to the present invention, by being able to use without distinguishing the installation state such as on-premise and cloud, it is possible to simplify or omit server selection in the course of the calculation executor eu, who normally carries out this conventionally, selecting servers to execute calculation. The job execution server 3 connects directly (InfiniBand, PCIE connection, or external) with storage (not shown), or through VPN, and performs temporary data storage.

In addition, in the distributed processing system of FIG. 1, the distributed processing master server 2 is arranged to each of the plurality of management units m managed respectively by the plurality of managers mu. The distributed processing master server 2 of a predetermined management unit m monitors the state of a plurality of the job execution servers 3 within the same management unit m. One of the distributed processing master servers 2 is established for each of the management units m in the example of FIG. 1: however, it is not to be particularly limited to this. In other words, there may be a single or a plurality of the distributed processing master servers 2 in the network. In the case of there being one or a few distributed processing master servers 2 in each of the management units m, it is possible to reduce the capital investment, and possible to simply perform all monitoring related to calculation executors, respective job, etc. In the case of the distributed processing master servers 2 being a plurality or many for each of the management units m, it is effective in function retention relative to the stopping/breakdown of part of the distributed processing master servers 2, function maintenance relative to access load growth of many calculation performers eu, etc. In the case of a plurality of distributed processing master servers 2 existing, it is possible to determine the priority among distributed processing master servers 2 based on a predetermined algorithm, and a distributed processing master server 2 having low priority can follow the instruction of a distributed processing master server 2 having high priority. The priority at this time may be fixed from when first installed, or may vary with time. Thereby, for example, with the viewpoint of N types of indicators described later, in the case of the suitability of the job execution server managed by the distributed processing master server 2 being predicted in advance, or a case of the suitability being determinable in the course of submitting, executing, completion, etc. of the job, it is possible to allocate the job appropriately to a job execution server.

In such a distributed processing system of FIG. 1, the calculation executor eu can operate the executor terminal 4 to access the distributed processing infrastructure web server 1, and make a request for execution of a predetermined job. In other words, upon the executor terminal 4 requesting execution of a job, it is sufficient if able to access the distributed processing infrastructure web server 1 via IP communication such as the internet. Thereby, a distributed instruction operation by the calculation executor eu himself/herself is unnecessary, and the execution of a job involving distributed processing is started in the distributed processing system of FIG. 1.

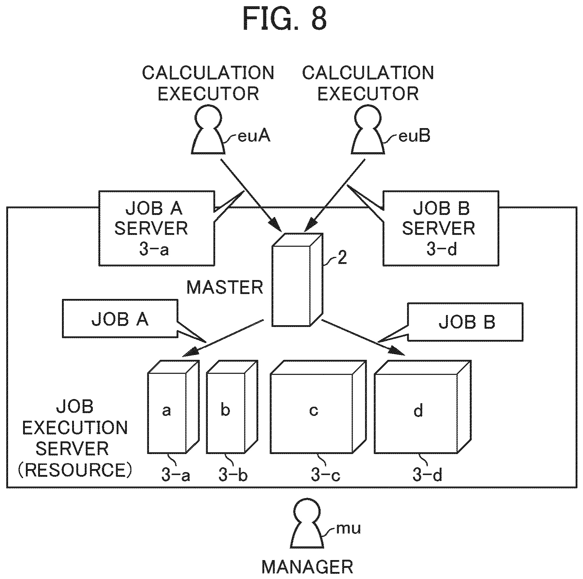

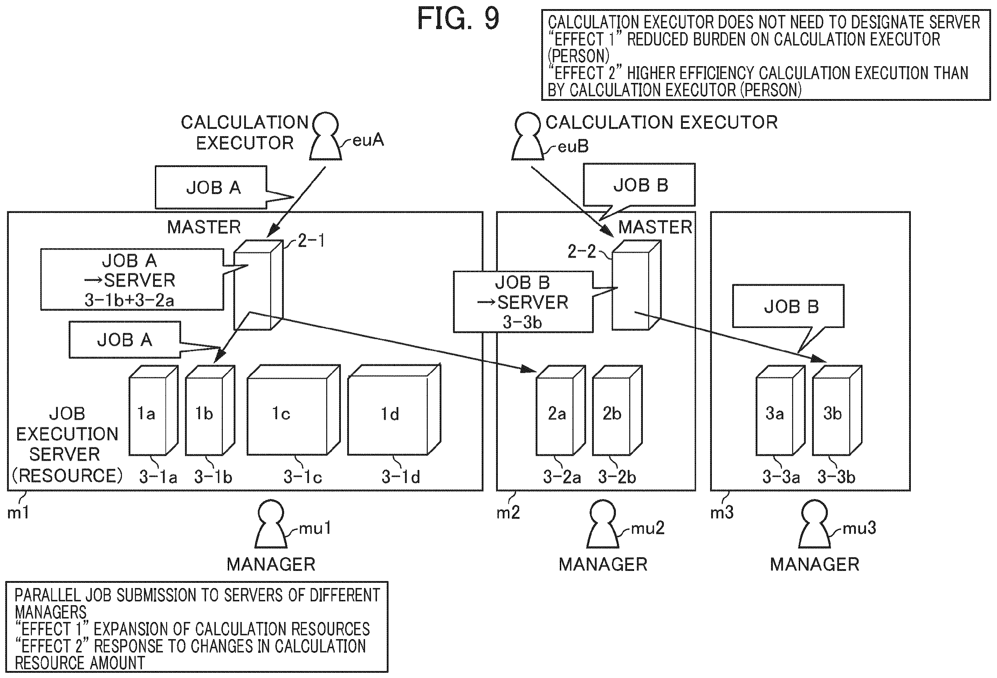

The distributed processing infrastructure web server 1 collaborates with the distributed processing master servers 2 via IP communication, and provides a job sent from the executor terminal 4 to the distributed processing master server 2. In other words, the distributed processing master server 2 collaborates with the distributed processing infrastructure web server 1 to acquire jobs sent from the executor terminals 4, and sets two or more allocation destinations among the plurality of job execution servers 3, and distributes these jobs and transfers to this two or more allocation destinations. It should be noted that it is a matter of course that the distributed processing master server 2 within a predetermined management unit m can set the job execution servers 3 within the same management unit m similarly to the conventional master server (refer to FIG. 8 described later), and further, it is possible to set a job execution server 3 belonging to a separate management unit m having a different manager mu as the allocation destination, as necessary (refer to FIG. 9 described later). Each of the plurality of job execution servers 3 set as an allocation destination by the distributed processing master server 2 executes the respective jobs which have been distributed and transferred from this distributed processing master server 2.

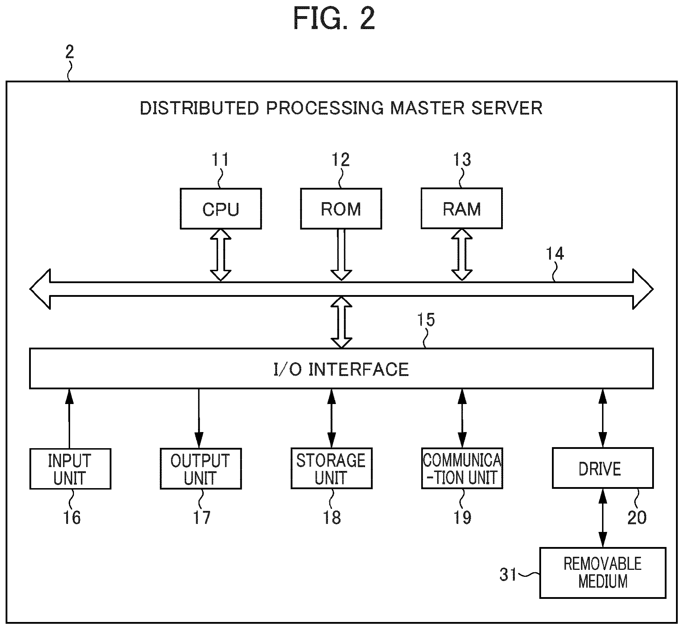

FIG. 2 is a block diagram showing an example of the hardware configuration of distributed processing master servers in the distributed processing system of FIG. 1.

The distributed processing master server 2 includes a CPU 11 (Central Processing Unit), ROM 12 (Read Only Memory), RAM 13 (Random Access Memory), a bus 14, an I/O interface 15, an input unit 16, an output unit 17, a storage unit 18, a communication unit 19 and a drive 20.

The CPU 11 executes various processing in accordance with programs recorded in the ROM 12, or programs loaded into the RAM 13 from the storage unit 18. The data, etc. required upon the CPU 11 executing various processing is stored as appropriate in the RAM 13.

The CPU 11, ROM 12 and RAM 13 are connected to each other via the bus 14. The I/O interface 15 is also connected to this bus 14. The input unit 16, output unit 17, storage unit 18, communication unit 19 and drive 20 are connected to the I/O interface 15.

The input unit 16 is configured by various hardware buttons, etc., and inputs various information according to instruction operations of an operator. The output unit 17 is configured by a display such as liquid crystal, and displays various images.

The storage unit 18 is configured by DRAM (Dynamic Random Access Memory), etc., and stores various data. The communication unit 19 controls communication with other devices (e.g., distributed processing infrastructure web server 1 or job execution servers 3) via a network N including the internet.

The drive 20 is provided as necessary. A removable medium 31 consisting of a magnetic disk, an optical disk, a magneto-optical disk, semiconductor memory or the like is fitted to the drive 20. The programs read out from the removable medium 31 by the drive 20 are installed to the storage unit 18 as necessary. In addition, similarly to the storage unit 18, the removable medium 31 can also store the various data stored in the storage unit 18.

It should be noted that, although not illustrated, the distributed processing infrastructure web server 1 and the executor terminal 4 in the distributed processing system of FIG. 2 also have the hardware configuration shown in FIG. 2. In addition, the job execution server 3 is basically the same as the hardware configuration shown in FIG. 2; however, there are also cases of it including one or more GPUs (Graphics Processing Unit), in addition to the one or more CPUs 11. In addition, there are also cases where the job execution server 3 includes optional operation units such as an NPU (Neural Network Processing Unit), TPU (Tensor Processing Unit), and QPU (Quantum Processing Unit).

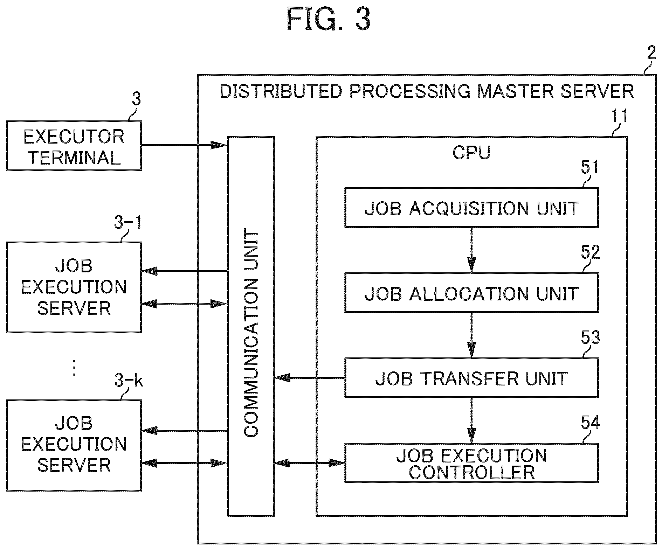

FIG. 3 is a functional block diagram showing a functional configuration example of the distributed processing master server of FIG. 2.

As shown in FIG. 3, a job acquisition unit 51, a job allocation unit 52, a job transfer unit 53 and a job execution controller 54 function in the CPU 11 of the distributed processing master server 2.

The job acquisition unit 51 collaborates with the distributed processing infrastructure web server 1 to acquire one or more jobs sent from each of one or more executor terminals 4, and saves the one or more jobs in the storage unit 18, etc. The job allocation unit 52 attempts optimization of jobs, by conducting job allocation with various indicators such as information of the job execution server 3 which is the allocation destination as constraints for the one or more saved jobs. Herein, "job allocation" indicates setting the allocation destination of a job from among a plurality of the job execution servers 3. The job transfer unit 53, in accordance with job allocation, transfers the one or more jobs to one job execution server 3 set as the allocation destination, or distributes and transfers to a plurality of job execution servers 3 set as allocation destinations. The job execution controller 54 controls the executing the one or more jobs by the one or plurality of job execution servers 3 set as the allocation destination.

Herein, for example, the job allocation unit 52 may conduct the job allocation such that submits (transfers) jobs immediately in the order of receiving the jobs, in consideration of the indicators shown below. It is possible thereby to perform job allocation, according to indicators easily recognized by the calculation executor, such as the order in which jobs are received. In addition, for example, in the case of jobs which end in a short time being sporadically submitted, and the proportion of idle time (time when job execution server can accept jobs, but job is not allocated thereto) being large, the jobs can be carried out efficiently. In addition, the job allocation unit 52 may perform job allocation such that sets a fixed time and performs acceptance of jobs, and conducts optimization on the plurality of jobs accepted at any time. It is thereby possible to conduct job submission under a priority level based on any weighting of the plurality of indicators, and any determination conditions, which is not possible in job submission in the order in which jobs are accepted. Additionally, the job allocation unit 52 may conduct job allocation such that provides a queue jumping constraint and immediately executes a job satisfying the condition, even if a scheduled job is already in progress. Even in a case of there being a job already in execution, and the job execution server 3 being occupied, it is thereby possible to conduct job submission as early as possible for a newly created job for which prioritized execution is desired.

Furthermore, the details of job allocation by the job allocation unit 52 will be described below. The job allocation unit 52 can achieve optimization of jobs, by executing job allocation based on M-types (M is an integer value no great than N) of indicators, among the predetermined N-types (N is an integer value or 2 or less) of indicators.

Herein, the N-types of indicators are not particularly limited; however, the following such indicators can be employed. For example, it is possible to employ the specifications (CPU, GPU, memory, etc.) of the job execution server 3 which is a candidate for allocation destination as indicators. For example, it is thereby possible to appropriately allocate job execution servers having computational performance suited to the operation contents and the scale depending on the data size, execution period, etc. of the job. For example, it is possible to employ the communication rate of the network to which the job execution server 3 is connected as the indicator. For example, it is thereby possible to appropriately allocate job execution servers having communication performance suited to the data scale or communication frequency of the job. For example, it is possible to employ information related to the device settings of the job execution server 3 (security information, OS, implementation compiler, etc.) as the indicator. For example, it is thereby possible to appropriately allocate the job execution server having device settings suited to the application contents and version of the job. For example, it is possible to employ information of the power supply for the job execution server 3 (stability of power supply, whether or not renewable energy, etc.) as the indicator. For example, it is thereby possible to execute a job while curbing energy cost. In addition, for example, it is possible to avoid scenarios where the power supply is interrupted due to influences such as climate, and execute jobs in consideration of the environment. For example, it is possible to employ geographical information of the installation location of the job execution server 3 (policy of data handling of local government and management organization, climate and air conditioning environment impacting server operating temperature) as the indicator. For example, it is thereby possible to appropriately allocate the job execution server which runs stably in consideration of the cooling state. In addition, for example, it is possible to appropriately allocate job execution servers conforming to laws and regulations for data handling, export management, etc., or rules set in advance by an organization. For example, it is possible to employ the execution efficiency and execution rate of a job as indicators. For example, by setting the history of past similar jobs as an indicator, it is thereby possible to appropriately estimate the execution time and completion time of similar jobs, and then, possible to appropriately allocate job execution servers. For example, it is possible to employ operational performance of the job execution server 3 as an indicator. For example, it is thereby possible to avoid units prone to failure, and appropriately allocate job execution servers. For example, it is possible to employ the classification of the owner (manager mu, etc.) of the job execution server 3 as an indicator. For example, in the case of there being several managers mu, it is possible to try matching of the manager mu with the calculation executor eu or the manager mu with the job, and it is possible to realize the use of the job execution server according to the desired industry or job purpose, or use of the job execution server based on individual contracts. For example, it is possible to employ the classification of the owner of the job (calculation executor eu, etc.) as the indicator. It is thereby possible to achieve matching of the manager mu with the calculation executor eu, or the job execution server with the calculation executor eu, and it is possible to realize the use of a job execution server based on individual contracts. For example, it is possible to employ the time and date of an installation location of the job execution server 3 as the indicator. It is thereby possible to determine the start or end time of a job, and appropriately allocate the job execution server. More specifically, for example, an input field of date or time (calendar or character input format) is presented to the calculation executor eu, and the job allocation may be made by the job allocation unit 52 with the time and date designated by the calculation executor eu (for example, date and time of start or end of the job) as the indicator. For example, upon trying to submit a certain job, it is possible to employ the information of a job for which execution was started in the past, or a job already scheduled (aforementioned indicators such as date and time, execution time, execution efficiency and execution rate) as the indicator. For example, for a case of estimating the time required for each job in advance, referencing the date and time of the start or end of a currently executed job, in a scenario where it is predicted to take a longer time than initially estimated, it is thereby possible to automatically postpone or appropriately allocate to a job execution server different from that initially, each job scheduled after this. A change in schedule of such jobs may be performed upon a new job being submitted (allocated), and may be performed routinely such as every several minutes. By the latest schedule of jobs being updated, the calculation executor can more precisely grasp the congestion or free time of job execution servers, which can contribute to the formulation of an efficient job execution plan (experimental plan).

The M-types of indicators used in optimization (job allocation) may be a specific one among the aforementioned N-types of indicators, but may be a plurality of types. In the case of using a plurality of types of indicators, the job allocation unit 52 can perform optimization (job allocation) of jobs by combining a plurality of types of indicators according to arbitrary weighting. This weighting may be determined automatically using an arbitrary algorithm. In addition, a part or the entirety of the M types may be determined by an arbitrary input. By automatically determining, it is possible to reduce the burden on the calculation executor, and possible to conduct job allocation based on a more precise numerical indicator. On the other hand, in the case of determining by arbitrary input, it is possible to conduct job allocation by more precisely reflecting the intention of the calculation executor.

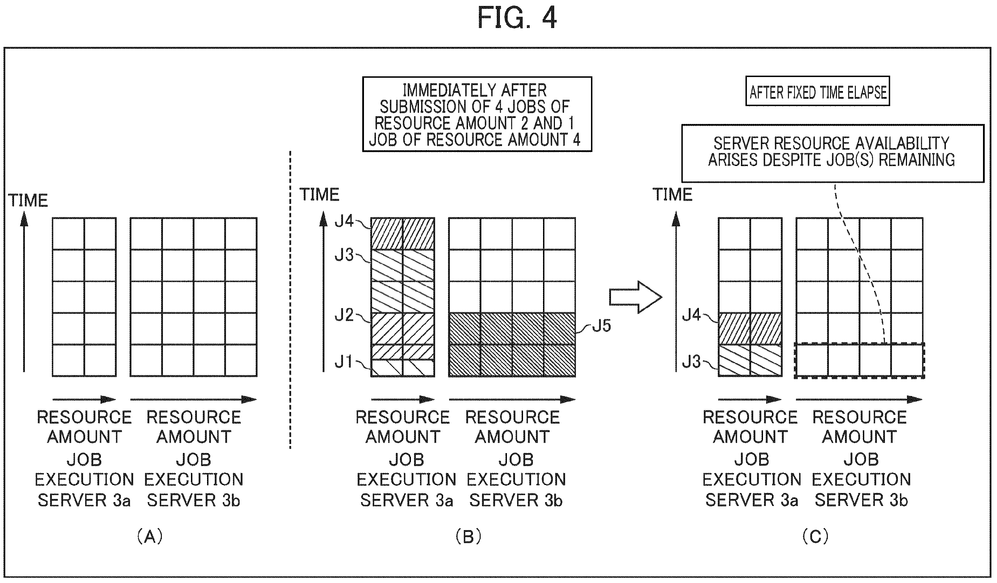

FIG. 4 is a view showing a specific example of job allocation by the job allocation unit of FIG. 3. FIG. 4(A) is an example of a table of job allocation, in which the vertical axis shows time, and the horizontal axis shows the "resource amount" as a server specification of the job execution server 3a. In the table of FIG. 4(A), one square indicates one unit of resource amount. One unit of resource amount can be arbitrarily set such as a unit number of GPUs or CPUs. In other words, the example of FIG. 4(A) establishes a case where the job execution server 3a having a resource amount of 2 as the server specification, and the job execution server 3b having a resource amount of 4 as the server specification exist as candidates for allocation destination.

The example of FIG. 4 shows an example in which the job allocation is performed by only the indicator of the server specification of the allocation destination (resource amount) being used (M=1 type of indicator). More specifically, FIG. 4(B) shows a table immediately after job allocation was performed in the case of jobs J1 to J4 having a resource amount of 2, and job J5 having a resource amount of 4 being acquired. Since job allocation is performed by only the indicator of the server specification (resource amount) of the allocation destination being used, the jobs J1 to J4 having a resource amount of 2 are allocated to the job execution server 3a having a resource amount of 2 as the server specification, while the job J5 having a resource amount of 4 is allocated to the job execution server 3b having a resource amount of 4 as a server specification. In this case, when a certain time elapses, the jobs J1 and J2 are executed by the job execution server 3a, while the job J5 is executed by the job execution server 3b; therefore, as shown in FIG. 4(C), resource availability occurs in the job execution server 3b irrespective of jobs J3 and J4 remaining in the job execution server 3a.

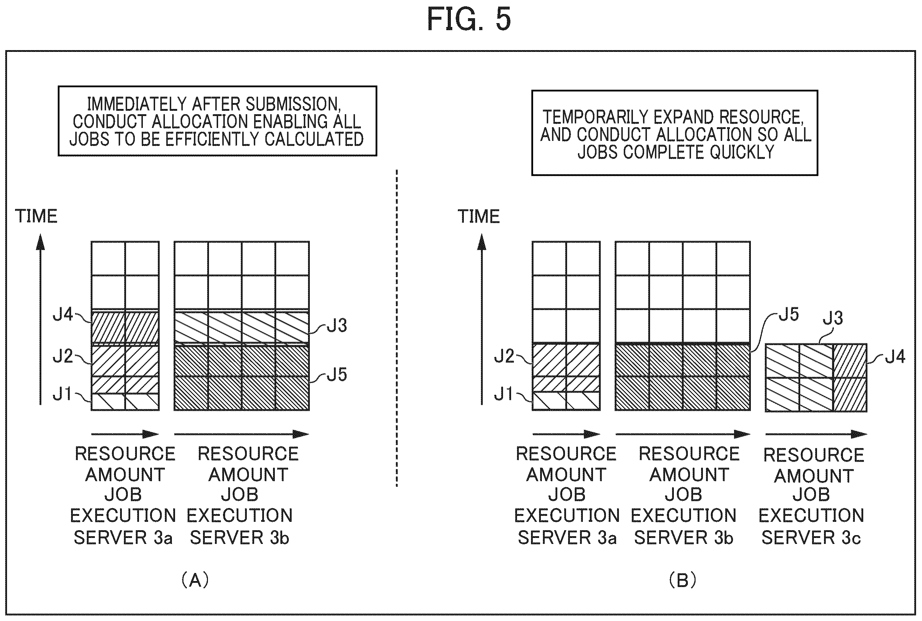

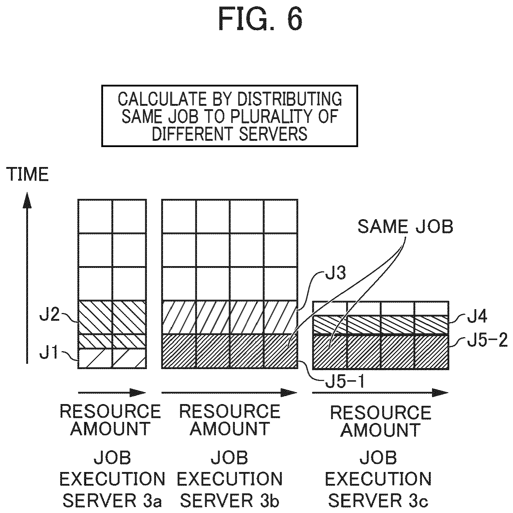

As shown in such FIG. 4, there are cases where optimization is difficult when using only M=1 type of indicator as the job allocation. In other words, in order to achieve optimization, it is favorable to combine a plurality of types (M is 2 or more) of indicators as job allocation, as shown in FIG. 5 or 6.

FIG. 5 shows a specific example of job allocation by the job allocation unit of FIG. 3, and is an example differing from FIG. 4. The example of FIG. 5 also shows a table immediately after job allocation was performed in the case of jobs J1 to J4 having a resource amount of 2 and job J5 having a resource amount of 4 being acquired. Herein, jobs J1 to J4 shall be jobs for which parallel processing is possible, as in jobs related to the rendering described later, i.e. job for which a part of the job and the remaining part thereof are simultaneously executable in parallel by separate computational resources.

FIG. 5(A) shows an example in which job allocation was performed by M=2 types of indicators such as the server specification (resource amount) of the allocation destination, and the execution efficiency of the job being used. In the example of FIG. 5(A), the jobs J1, J2 and J4 having a resource amount of 2 are allocated to the job execution server 3a having a resource amount of 2 as the server specification. On the other hand, to the job execution server 3b having the resource amount of 4 as a server specification, the job J5 having a resource amount of 4 is allocated, and the job J3 having a resource amount of 2 is allocated so as to be executed by parallel processing. Optimization such that resource availability does not arise as in FIG. 4 is thereby realized. In other words, immediately after submission, implementation of job allocation whereby all of jobs J1 to J5 can be efficiently computed becomes possible.

FIG. 5(B) shows an example in which job allocation was performed using M=3 types of indicators such as server specification (resource amount) of the allocation destination, and execution efficiency and execution rate of the job. Herein, the present embodiment is a configuration in which a temporary expansion in resource amount, i.e. a temporary increase in the number of job execution servers 3 that are the allocation destinations, is possible. It should be noted that, in the present embodiment, as shown in FIG. 9 described later, a job execution server 3 belonging to a management unit m having a different manager mu is also able to be used for temporary expansion. In this case, an indicator showing whether the job execution server 3 belonging to a management unit m having a different manager mu can be set as the allocation destination can also be used upon appropriate job allocation. In the example of FIG. 5(B), the jobs J1 and J2 having a resource amount of 2 are allocated to the job execution server 3a having a resource amount of 2 as the server specification. The job J5 having a resource amount of 4 is allocated to the job execution server 3b having a resource amount of 4 as the server specification. Furthermore, in the temporarily expanded job execution server 3c having a resource amount of 3 as the server specification, the jobs J3 and J4 having a resource amount of 2 are allocated so as to be executed by parallel processing. Optimization such that resource availability does not arise as in FIG. 4 is thereby realized. In other words, immediately after submitting, implementation of job allocation whereby all of jobs J1 to J5 can be efficiently computed becomes possible. In this way, implementation of job allocation temporarily expanding resources whereby all of the jobs J1 to J5 can be completed early becomes possible.

Herein, since the jobs J1 to J4 are jobs which can be parallel processed as in the jobs related to rendering described later, implementation of job allocation such that assigns a part of the job and a remaining part thereof to separate job execution servers 3a is also possible, as shown in FIG. 6. FIG. 6 shows a specific example of job allocation by the job allocation unit of FIG. 3, which is a different example than FIGS. 4 and 5. The example of FIG. 6 also shows a table immediately after job allocation was performed in the case of the jobs J1 to J4 having a resource amount of 2, and the job J5 having a resource amount of 4 being acquired.

FIG. 6 shows an example in which job allocation was performed by M=2 types of indicators such as the server specification (resource amount) of the allocation destination and the execution rate of the job being used. In the example of FIG. 6, the jobs J1 and J2 having a resource amount of 2 are allocated to the job execution server 3a having a resource amount of 2 as the server specification. To the job execution server 3b having a resource amount of 4 as the server specification, a job J5-1 which is part of the job J5 having a resource amount of 4 is allocated, and the job J3 having a resource amount of 2 is allocated so as to be executed by parallel processing. Furthermore, to the job execution server 3c temporarily expanded having a resource amount of 4 as the server specification, a job J5-2 which is another part of the job J5 having a resource amount of 4 is allocated, and the job J4 having a resource amount of 2 is allocated so as to be executed by parallel processing.

Furthermore, a specific case example of job allocation such as that shown in FIG. 5 or 6, i.e. job allocation using a plurality of types (M of 2 or more) of indicators, will be described.

As an example capable of using the execution efficiency of the job as part of the indicators, a job related to rendering will be described. A job related to rendering is an aggregate of frames, and thus has a high efficiency of parallel processing irrespective of the data volume. In other words, the execution of a job is possible by distributing each frame to a plurality of job execution servers 3. By distributing such frames (for example, refer to job J3 in FIG. 5(A)), the computation time as a whole can be shortened. Additionally, in the case of other jobs being simultaneously executed, there is a possibility of being able to make the waiting time shorter by allocating to a different job execution server 3 (for example, refer to FIG. 6), and there is a possibility of being able to also shorten the overall time from job submission to processing completion. The job allocation unit 52 may grasp the parallel performance of such a job (efficiency from distributing and processing frames in present example) from the advance input of the calculation executor eu, or may estimate without input of the calculation executor eu by statistical processing or the like. In addition, the job allocation unit 52 can cause only the first few seconds of the job to be executed and acquiring the time required in this processing, and estimate the parallel performance and time required overall from this time. Even in a situation where the calculation executor eu cannot predict the overall execution time by this processing, the prediction of the execution time is possible automatically. This is not limited to rendering, and is an effective technique similarly even if a type of job other than this. In addition, in jobs related to rendering, there are cases where a combination of data is specified according to the renderer to make the most effective use of the job execution servers 3. Therefore, the job allocation unit 52 may implement job allocation also using the combination of renderer and hardware as the indicator.

Next, a job of machine learning will be described as another example capable of using the execution efficiency of the job as part of the indicators. For jobs related to model generation of machine learning, from the viewpoint of data transfer rate via a network, storage capacity and auxiliary storage capacity of the job execution server 3, etc., distribution to a plurality of job execution servers 3 may be necessary according to the data size of the model and data size required in learning. However, in the model of machine learning, there are cases requiring communication between distributed processing, and since the efficiency of parallel processing declines when such jobs are distributed to job execution servers 3 in physically distanced space, it is better not to distribute in order to shorten the computation time. On the other hand, for jobs having high efficiency of parallel processing, since the number of job execution servers 3 which can be used simultaneously by distributing increases, it is possible to shorten the computation time as a whole. Additionally, in the case of other jobs being executed simultaneously, there is a possibility of being able to make the waiting time shorter by allocating to different job execution servers 3, and there is a possibility of being able to also shorten the overall time from job submission to processing completion. The job allocation unit 52 may grasp the job parallel performance (efficiency of parallel processing by distribution of jobs in present example) from advance input of the calculation executor eu, or may grasp it according to relevant information of jobs arbitrarily accepted from the calculation executor eu (for example, input method of choosing one from "this calculation seems better distributed", "seems better not to distribute", "either is okay", or the like). In addition, the job allocation unit 52 may estimate the job parallel performance without the input of the executor, according to the experience of jobs conducted in the past (results of computation time according to input information), statistical processing done based on accumulated data, or the like. According to such processing, it is possible to efficiently execute jobs whether the calculation executor eu is familiar with the contents of job, or in cases not as such. In addition, the job allocation unit 52 can cause only the first few seconds of the job to be executed, and estimate the parallel performance and time required overall from this time. As described above, in job allocation related to a machine learning job, it is suitable if using various information exemplified as the aforementioned N-types of indicators, not only the execution efficiency of the job. In addition, in jobs related to machine learning, the conditions for retaining input data are determined by the laws of each country, etc. Therefore, the job allocation unit 52 may implement job allocation by adding positional information of equipment provided by a third party (for example, the third-party server described later), laws, etc. as the indicators.

Next, a job of scientific calculation will be described as another example capable of using the execution efficiency of a job as part of the indicators. A job related to scientific calculation necessitates a higher degree of arithmetic processing than rendering or machine learning, and thus, there are cases requiring distribution to a plurality of job execution servers 3 for calculation time shortening. According to the functions in the scientific calculation, in the calculation conducted by dividing the computational processing into the CPU and GPU, the job allocation unit 52 can predict the server specifications, etc. that can shorten the computation time from the parallel performance of the CPU and GPU, and the communication frequency and communication volume between the CPU-GPU, and can implement optimization (job allocation) of jobs based on this prediction result. In addition, the job execution server 3 may determine the decentralized distribution from the experience of jobs conducted in the past (results of computation time according to input information), and relevant information of optionally accepted jobs. As a simple example, the job execution server 3 can select "for CPU processing with low parallel performance, submit job to serial CPU", "in processing with low communication frequency between CPU-GPU, use several GPUs", "in processing having large communication volume, perform parallel processing with identical job execution servers 3 having close physical network distance, or job execution servers 3 with same room installation", etc., and implement job allocation based on this selection result. As described above, for job allocation related to a scientific calculation job, it is suitable if using various information exemplified as the aforementioned N-types of indicators, not only the execution efficiency of the job. In addition, in a job related to scientific calculation, there are cases where the conditions for retaining a use code, input data, etc. are determined by the laws of each country, etc. Therefore, the job allocation unit 52 may implement job allocation by adding positional information of equipment provided by a third party (for example, the third-party server described later), laws, etc. as the indicators.

In addition, as another example, in a molecular dynamics calculation that process part of the computation of multiparticle interactions by GPU and the other by CPU, an example of a case premised on "want to shorten computation time while securing at least a certain computation amount by GPU" will be considered. In this case, the job allocation unit 52 can use the experience of jobs conducted in the past, e.g., experience such as "GPU computation efficiency low when analysis model is small, and GPU computation efficiency high when analysis model is large", extract information of the analysis model size from the input file, and determine the quantity of GPUs to be used from the contents thereof. Even in the job allocation of the present example, it is suitable if using various information exemplified as the aforementioned N-types of indicators, not only the execution efficiency of the job.

As described above, the job allocation unit 52 can achieve optimization of jobs, by implementing job allocation based on M-types (M is an integer value of N or less) of indicators, among the predetermined N-types (N is an integer value of 2 or more) of indicators. Herein, although M may be 1, the matter of being suitable if 2 or more is also as described above. In the case of the job allocation unit 52 implementing job allocation based on M=2 types or more indicators, for example, it is suitable to implement as follows. In other words, it is suitable if the job allocation unit 52 groups a plurality of job execution servers 3 for every M-types of indicators among the N-types of indicators, and implements job allocation based on the results of grouping for every M-types of indicators.

For example, the horizontal axis in FIG. 4A is an example of an axis showing the result of grouping for an indicator of server specifications such as the resource amount. In other words, in the example of FIG. 4A, grouping is done into a group having a resource amount of 2 as a server specification, and a group having a resource amount of 4 as a server specification.

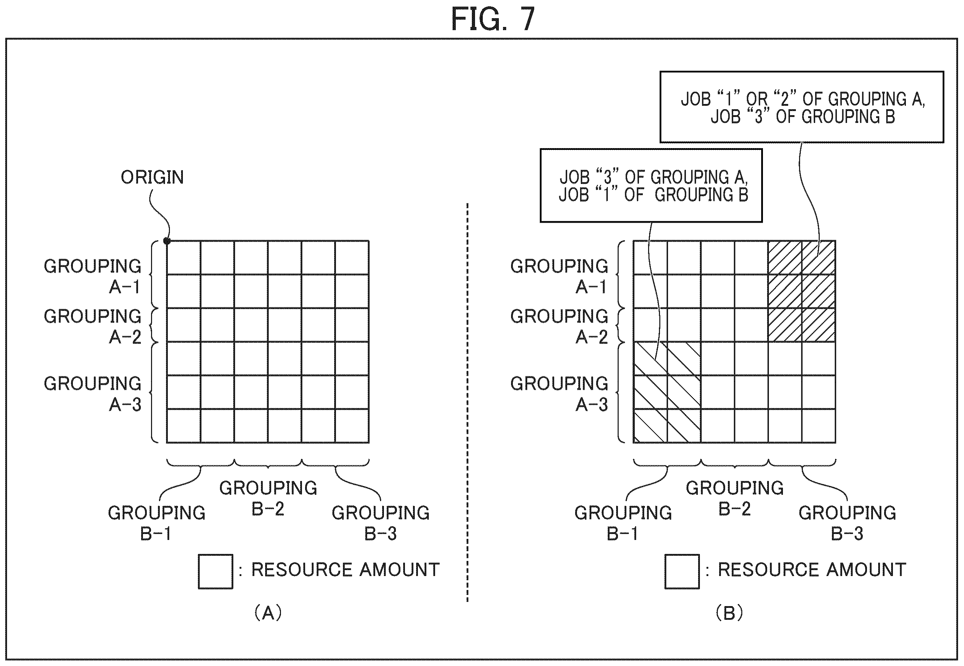

Such an example of FIG. 4 is an example of M=1 type of indicator; whereas, the example of FIG. 7 is an example of M=2 types of indicators. In other words, FIG. 7 is a table showing a specific example of job allocation by the job allocation unit of FIG. 3, which is an example different from the example of FIG. 4. FIG. 7(A) is an example of a table of job allocation, the vertical axis showing an axis indicating the result of grouping of first indicators (hereinafter called "grouping A"), and the horizontal axis showing an example indicating the result of grouping of second indicators (hereinafter called "grouping B"). In the table of FIG. 7(A), one square indicates 1 unit of resource amount of the job execution server 3. In other words, on the vertical axis, each of the three groups A-1 to A-3 obtained as a result of grouping of first indicators is respectively arranged from the origin to below in the same drawing. On the horizontal axis, each of the three groups B-1 to B-3 obtained as a result of grouping of second indicators is respectively arranged from the origin to the right in the same drawing.

FIG. 7(B) shows an example of the result of job allocation being conducted by the job allocation unit 52. More specifically, as shown in FIG. 7(B), the job in the lower left of the same drawing is allocated to group A-3 in grouping A, and allocated to group B-1 in grouping B. In addition, the job in the upper right of the same drawing is allocated to group A-1 or group A-2 in grouping A, and allocated to group B-3 in grouping B.

Above, job allocation using M-types of indicators among the N-types of indicators will be described as a feature of the distributed processing system of the present embodiment. Furthermore, hereinafter, another feature of the distributed processing system of the present embodiment will be described by referencing FIGS. 8 and 9. FIG. 8 is a drawing for explaining features of the distributed processing system of FIG. 1, and explains a conventional distributed processing system. FIG. 9 is a drawing for explaining features of the distributed processing system of FIG. 1 relative to the conventional distributed processing system of FIG. 8.

As shown in FIG. 8, the conventional distributed processing system, for example, implements job allocation, schedule management, execution monitoring, etc. in a server group having a common manager mu. Herein, server group means the plurality of job execution servers 3-a to 3-d in the example of FIG. 8; however, it actually indicates computational resources consisting of one job execution server 3 to which a plurality of arithmetic units are equipped, or a plurality of such job execution servers 3. The conventional distributed processing system allocates any job to a specific arithmetic unit in the plurality of job execution servers 3 within the same management unit m, or allocates to a specific arithmetic unit from among computational resources spanning the plurality of job execution servers 3 within the same management unit m. For example, in the example of FIG. 8, the distributed processing master server 2 of a predetermined management unit m accepts a request to execute the job A with the server 3-a from the calculation executor euA, and accepts a request to execute the job B with the server 3-d from the calculation executor euB. When this is done, the distributed processing master server 2 implements job allocation such that allocates the job A to an arithmetic unit within the server 3-a in the same management unit m, and allocates the job B to an arithmetic unit of the server 3-d in the same management unit m. In this way, the conventional distributed processing system accepts designation of the desired arithmetic unit from the calculation executor eu, performs allocation to the arithmetic unit, and performs schedule management in the order in which the plurality of calculation tasks are accepted. At this time, the conventional distributed system executes processing that establishes other jobs in a waiting state upon there being a job in execution, by performing execution monitoring for the availability of the arithmetic units. According to the above, the conventional distributed processing system makes a determination of execution order in the case of there being several jobs. However, in the conventional distributed processing system, since the specification of the job execution server 3 and number of servers in the server group are fixed, upon there being few jobs, a time loss arises which is a state where a plurality of the job execution servers 3 are not allocated, and upon jobs being excessive, there is a problem in that the waiting time until a job is executed becomes tremendous. Additionally, in the case of advanced computational processing being required, jobs exist having low execution efficiency by a plurality of job execution servers 3. Therefore, in schedule management determining the execution order in the order of job acceptance, it has been difficult to efficiently execute several jobs.

For this reason, as described above, the distributed processing system of the present embodiment enables efficient execution of jobs as shown in the aforementioned FIGS. 4 to 7, by realizing job allocation using M-types of indicators among the N-types of indicators. Furthermore, in the distributed processing system of the present embodiment, as shown in FIG. 9, even without the calculation executor eu designating the job execution server 3, the distributed processing master server 2 can implement job allocation such that sets an appropriate plurality of job execution servers 3 of not only its own management unit m, but also including another management unit m.

For example, by the calculation executor euA simply making an execution request for the job A, job allocation as shown in FIG. 9 is automatically executed. In other words, the distributed processing master server 2-1 of the management unit m1 can implement job allocation such that allocates a part of the job A to the job execution server 3-1b within the same management unit m1, and allocates the remaining part of the job A to the job execution server 3-2a within a different management unit m2. In addition, for example, by the calculation executor euB simply making an execution request for the job B, job allocation as shown in FIG. 9 is automatically executed. In other words, the distributed processing master server 2-2 of the management unit m2 can implement job allocation such that allocates the job B to the job execution server 3-3b within a different management unit m3.

In this way, the distributed processing system of the present embodiment can submit jobs in parallel to job execution servers 3 having different managers mu. Expansion of the calculation resources thereby becomes possible, and the handling of changes in the calculation resource amount becomes possible (refer to FIGS. 5 and 6).

In addition, in the distributed processing system of the present embodiment, the calculation executor eu does not need to designate the job execution server 3. The burden on the calculation executor eu who is a natural person thereby decreases, and it becomes possible to execute calculation more efficiently than the calculation executor eu who is a natural person.

More specifically, for example, the job execution servers 3 are roughly classified into on-premise server, cloud server, and third party provided machine (third party-server). The three types of servers of on-premise server, cloud server and third-party server are generally not clearly separated and defined. However, in the present disclosure, the job execution server 3 shall correspond to any of these three types, and specifically shall indicate the following. On-premise server indicates a job execution server 3 for which the physical location is managed or grasped by the calculation executor eu or manager mu. Cloud server indicates a job execution server 3 which uses a service or the like that publicly solicits end-users, and can be used via communication such as the internet. Third-party server is a server not used in a service or the like publicly soliciting end-users, and indicates a job execution server 3 for which use is permitted to an individual calculation executor eu or manager mu.

For example, in FIG. 9, the manager mu1 shall be an organization A (or person belonging to this organization A), the calculation executor euA shall belong to the organization A, and each of the job execution servers 3-1a to 3-1d in the management unit m1 managed by this organization A shall exist at each of the locations a to d in the organization A. In this case, when the calculation executor euA at the location a in the organization A uses the job execution servers 3-1a and 3-1b present at locations a and b, respectively, the job execution servers 3-la and 3-1b are on-premise servers. In the case of an organization B (or person belonging to this organization B) publicly running a rental service of a server operating via the internet being a manager mu2, when the calculation executor euA uses the job execution server 3-2a belonging to the management unit m2 thereof, the job execution server 3-2a is a cloud server. In the case of an organization C (or a person belonging to this organization C) that does not carry out a rental service of public servers being a manager mu3, and permission for use of the job execution servers 3-3a and 3-3b belonging to the management unit m3 being made individually to the organization A, when the calculation executor euA of the organization A uses the job execution server 3-3a, the job execution server 3-3a is a third-party server.

In job execution, the on-premise server is constituted from a plurality of nodes. For example, in the management unit m1 of the organization A, each of the job execution servers 3-1a to 3-1d is a node. In this case, although parallel processing is possible even inside of each one of the nodes, processing is possible also by using a plurality of nodes simultaneously. There is a limit to the memory size which can be used by one node, and jobs also exist which cannot be computed unless using a plurality of nodes due to being a learning model or the input data size. The distributed processing system (job allocation unit 52) of the present embodiment can implement job allocation such that establishes a calculation resource integrating a plurality of nodes put to use as on-premise, and optimally distributes a plurality of jobs submitted. The job allocation unit 52, in the case of determining that a submitted job cannot be processed with the only the on-premise computing power, it is possible to implement job allocation such that executes distribution to simultaneously use a cloud server (for example, the job execution server 3-2a, etc.). Depending on the type of job submitted, in the case of there being a job which can be calculation processed on the cloud server, the job allocation unit 52 can implement job allocation such that distributes jobs with the calculation resources integrating the on-premise server and a cloud server. At this time, the job allocation unit 52 can measure the communication rate with the cloud server that is the allocation target, and perform a calculation for the total computation time including the communication rate. This function is provided to the calculation executor eu, and the calculation executor eu can determine whether to execute calculation after waiting until availability appears in the calculation resource on-premise, or permit communication time and use a cloud resource. In addition, this overall computation time is also used as an indicator when the job allocation unit 52 automatically allocates jobs.

Furthermore, as a means for reinforcing the calculation resource, the job allocation unit 52 can also implement job allocation such that distributes jobs by establishing one resource also integrating a third-party server (for example, the job execution server 3-3a, etc.). Herein, the third-party server may be a server for calculation or a laptop, or may be a device such as a smart phone or a computer equipped to an electric vehicle or the like so long as a device including a function whereby calculation is possible. For the third-party server, it is necessary for software or the like to be installed for the distributed processing master server 2 to determine as a useable device, and by these, jobs are exchanged with the distributed processing master server 2 using a common protocol for distributed processing. The third party (manager mu3 in the example of FIG. 9) connects the provided device (job execution servers 3-3a and 3-3b in the example of FIG. 9) to the network, designates the time slot to use as the allocation destination of distributed processing, and the distributed processing master server 2 (distributed processing master server 2-1 in the example of FIG. 9) recognizes the third-party server (the job execution servers 3-3a and 3-3b in the example of FIG. 9) as the allocation destination only during this time. The job allocation unit 52 of the distributed processing master server 2 implements job allocation using the third party or indicator related to the third party in allocation to the third-party server. As the third party or indicator related to the third party, for example, it is possible to use an indicator exemplified as the aforementioned N types. More specifically, for example, the user classification of the third party, the server specifications (CPU, GPU, memory, etc.) of the allocation destination, communication rate of the network, information related to device settings (security information, OS, implementation compiler, etc.), power supply information (stability of power supply, whether or not renewable energy, etc.), geographical information of server installation location (policy of data handling of local government and management organization, climate and air conditioning environment impacting server operating temperature), etc. can be used. It should be noted that these indicators can naturally also be used for the on-premise server and cloud server. In addition, the job allocation unit 52 may implement job allocation using past operation results of each of the on-premise server, cloud server and third-party server as the indicators.

As described above, in the case of the job execution server 3-1a being present at the location a (location in country a) of the organization A, and the job execution server 3-1b being present at the location b (location in country b) of the organization A, for example, the calculation executor euA at the location a of the organization A can use the job execution servers 3-1a and 3-1b, and further, the cloud server (for example, the job execution server 3-2a, etc.) and/or the third-party server (for example, the job execution server 3-3a, etc.) as allocation destinations. In addition, the calculation executor euA can selectively limit the allocation destination, as in the use of only the job execution server 3-1a, use of only the job execution server 3-1b, use of the job execution server 3-1a and a cloud server, use of the job execution server 3-1a and a third-party server, use of the job execution servers 3-1a and 3-2a, etc. Similarly, the calculation executor euB at the location b of the organization A can use the job execution servers 3-1a and 3-1b, and further, the cloud server (for example, the job execution server 3-2a, etc.) and third-party server (for example, the job execution server 3-3a, etc.) as allocation destinations. In addition, the calculation executor euB can selectively limit the allocation destination as in the use of only the job execution server 3-1a, use of only the job execution server 3-1b, use of the job execution server 3-1a and a cloud server, use of the job execution server 3-1a and a third-party server, use of the job execution servers 3-1a and 3-2a, etc. As an example of the hardware configuration in this case, the job execution servers 3-1a and 3-1b are in the LAN of the organization A, and IP communication is possible with the distributed processing master server 2-1 and the executor terminal 4 of each of the calculator executors euA and euB by VPN connection. In addition, the third-party server is in a state in which IP communication is possible due to being a server published on DMZ or WAN. The calculation executors euA and euB are thereby able to connect to the job execution servers 3-1a and 3-1b, along with the third-party server. Actually accessing depends on the settings on the distributed processing master server 2-1 side of the distributed processing system according to the present embodiment. It should be noted that the allocation destination of the calculation executors euA and euB can be set independently.

As described above, the distributed processing system of the present embodiment realizes job allocation using M-types of indicators among the N-types of indicators; however, herein, a case of a representative algorithm for optimization of any two or more items will be described. For example, upon conducting processing of allocating an allocation destination based on the results of grouping for every M-types of indicators (for example, the aforementioned processing of FIG. 7), for example, it is possible to use a statistical method such as filtering or Bayes optimization of each indicator based on the separately inputted priorities. Hereinafter, as an example, a case is described of adopting, as the M-types of indicators, the 4 types of power supply stability to the calculation execution device, security level of calculation execution device, computing power of calculation execution device, and an amount of money consumed in running of the calculation execution device, and using a method such as the greedy algorithm in the optimization of distributed processing. In this case, it is possible to decide the priorities of the 4 types of indicators, and evaluate the calculation execution devices in order of higher priority. In other words, for example, first, the priorities of the 4 types of indicators are decided in advance according to the calculation executor eu or predetermined information processing device (for example, distributed processing master server 2). Then, the job allocation unit 52 can determine the job execution server 3 to be the allocation destination for a job, and implement job allocation, by using each of the M-types (4 types herein) of indicators in the order of higher priority thereof, and ranking the job execution servers 3. In other words, for example, the job allocation unit 52 first ranks the job execution servers 3 which are distribution candidates by the degree of power supply stability, which has the highest priority level. Then, the job execution servers 3 which are distribution candidates are ranked by the degree of security, which has the next highest priority level. Then, similarly, the job execution servers 3 which are distribution candidates are ranked by the degree of computing power, which has the next highest priority level. Finally, the job execution servers 3 which are distribution candidates are ranked by an amount of money consumed in running of the calculation execution device. Jobs are distributed with the distribution destinations in order of having the highest average rank in these four categories. Since the optimization problem using more than the 4 such types of indicators have complex solutions, effective distribution of jobs manually by the calculation executor eu is difficult. In such multi-objective optimization problems, many effective techniques have been developed, and the greedy algorithm is one of them. By using optimization capable of handling a plurality of indicators, including the greedy algorithm, it becomes possible to distribute jobs more effectively.

Although an embodiment of the present invention has been described above, the present invention is not to be limited to the aforementioned embodiment, and modifications, improvements, etc. in a scope which can achieve the object of the present invention are also included in the present invention.

For example, the configuration of the distributed processing system shown in FIG. 1 and the hardware configuration of the distributed processing master server 2 shown in FIG. 2 are merely exemplifications for achieving the object of the present invention, and are not particularly limited thereto.

In addition, the functional block diagram shown in FIG. 3 is merely an exemplification, and is not particularly limited thereto. In other words, it is sufficient if a function capable of executing the aforementioned series of processing as a whole is provided to the distributed processing system, and what kind of functional blocks are used in order to realize this function is not particularly limited to the example of FIG. 3.

In addition, the locations of the functional blocks are not limited to FIG. 3, and may be arbitrary. For example, at least part of the functional blocks shown in FIG. 3 may be transferred from the distributed processing master server 2 to the distributed processing infrastructure web server 1. In addition, one functional block may be configured by a single piece of hardware, may be configured by a single piece of software, or may be configured by a combination thereof.

In the case of having the processing of each functional block being executed by software, the programs constituting this software is installed from a network or recording medium to a computer or the like. The computer may be a computer built into dedicated hardware. In addition, the computer may be a computer capable of executing various functions by installing various programs, for example, in addition to a server, either a general-purpose smart phone or personal computer. The jobs distributed by the present technology are not limited to numerical simulation and machine learning jobs, and can be various types of jobs. Depending on the type of job, there are those requiring a large-scale computing machine, and those executable by small-scale hardware such as the aforementioned smartphone. Small-scale hardware such as a smartphone are inferior to large-scale computing machines in the individual abilities; however, they can also exhibit the same performance as large-scale computing machines by simultaneously using several pieces of hardware, and this case is highly effective as the distribution target of jobs.

The recording medium including such programs is not only configured from removable media distributed separately from the device main body in order to provide programs to each user, and is configured by recording media or the like provided to each user in a state pre-installed in the device main body.

It should be noted that in the present disclosure, the steps writing the program recorded in the recording medium include not only the processing performed in time series along the order, but also the processing performed in parallel or individually without being necessarily performed in time series.

In addition, in the present disclosure, the term "system" indicates an overall apparatus configured from a plurality of apparatuses, a plurality of means, and the like.

To summarize the above, the information processing device to which the present invention is applied only needs to have the following configuration, and can adopt various embodiments. The information processing device (for example, the distributed processing master server 2 of FIG. 2) to which the present invention is applied includes:
a job acquisition means (for example, the job acquisition unit 51 of FIG. 3) for acquiring, from each of one or more client devices (for example, the executor terminals 4-1 to 4-q of FIG. 1) on a client (for example, the calculation executors eu1 to euq of FIG. 1) side performing a calculation request for a predetermined job, one or more of the job;
a job allocation means (for example, the job allocation unit 52 of FIG. 3) for conducting, as job allocation, processing (for example, processing of allocating the job A to the job execution server 3-1b and the job execution server 3-2a in the example of FIG. 9) of defining at least part of a plurality of calculation execution devices (for example, the job execution servers 3-1a to 3-1d of the management unit m1, the job execution servers 3-2a and 3-2b of the management unit m2, and the job execution servers 3-3a and 3-3b of the management unit m3 of FIG. 9) as an allocation destination, based on M-types (M is an integer value less than or equal to N) of indicators among N-types (N is an integer value of 2 or more) of predetermined indicators, and allocating the one or more of the job to the allocation destination; and
a job transfer means (for example, the job transfer unit 53 of FIG. 3) for distributing and transferring the one or more of the job to the allocation destination in accordance with the job allocation.

The job allocation means can conduct as the job allocation, processing (for example, the processing of FIG. 7) of grouping the plurality of calculation execution devices for each of the M-types of indicators, and allocating at least part of the plurality of calculation execution devices as the allocation destination based on a result of grouping of each of the M-types of indicators.

The plurality of calculation execution devices can include devices (for example, the job execution servers 3-1a to 3-1d of the management unit m1, the job execution servers 3-2a and 3-2b of the management unit m2, and the job execution servers 3-3a and 3-3b of the management unit m3 of FIG. 9) independently managed by each of a plurality of managers, and the job allocation means can conduct the job allocation across the devices of each of the plurality of managers (for example, conduct job allocation as in FIG. 9).

The plurality of calculation execution devices can include one or more among an on-premise server (for example, the job execution servers 3-1a to 3-1d of the management unit m1 of FIG. 9), a cloud server (for example, the job execution servers 3-2a and 3-2b of the management unit m2 of FIG. 9) and a third-party server (for example, the job execution servers 3-3a and 3-3b of the management unit m3 of FIG. 9).

### EXPLANATION OF REFERENCE NUMERALS

1 distributed processing infrastructure web server
2 distributed processing master server
3 job execution server
4 executor terminal
11 CPU
12 ROM
13 RAM
14 bus
15 I/O interface
16 input unit
17 output unit
18 storage unit
19 communication unit
20 drive
31 removable medium
51 job acquisition unit
52 job allocation unit
53 job transfer unit
54 job execution controller
m management unit
mu manager
eu calculation executor

## Claims

1. An information processing device comprising:
a job acquisition unit for acquiring, from each of one or more client devices on a client side performing a calculation request for a predetermined job, one or more of the job;
a job allocation unit for conducting, as job allocation, processing of defining at least part of a plurality of calculation execution devices as an allocation destination, based on M-types (M is an integer value less than or equal to N) of indicators among N-types (N is an integer value of 2 or more) of predetermined indicators, and allocating the one or more of the job to the allocation destination; and
a job transfer unit for distributing and transferring the one or more of the job to the allocation destination in accordance with the job allocation.

2. The information processing device according to claim 1, wherein, in a case of the M being 4 or more, the job allocation unit conducts, as job allocation, processing of defining the allocation destination using a statistical optimization method, and allocating the one or more of the job to the allocation destination.

3. The information processing device according to claim 1, wherein the N-types of indicators include a date and time of start or end of a job.

4. The information processing device according to claim 1, wherein the job allocation unit
conducts, as the job allocation, processing of grouping the plurality of calculation execution devices for each of the M-types of indicators, and allocating at least part of the plurality of calculation execution devices as the allocation destination based on a result of grouping of each of the M-types of indicators.

5. The information processing device according to any one of claims 1 to 4, wherein
the plurality of calculation execution devices includes devices independently managed by each of a plurality of managers, and
the job allocation unit conducts the job allocation across the devices of each of the plurality of managers.

6. The information processing device according to claim 5, wherein
the plurality of calculation execution devices includes one or more among an on-premise server, a cloud server and a third-party server.

7. An information processing method executed by an information processing device, the method comprising:
a job acquisition step of acquiring, from each of one or more client devices on a client side performing a calculation request for a predetermined job, one or more of the job;
a job allocation step of conducting, as job allocation, processing of defining at least part of a plurality of calculation execution devices as an allocation destination, based on M-types (M is an integer value less than or equal to N) of indicators among N-types (N is an integer value of 2 or more) of predetermined indicators, and allocating the one or more of the job to the allocation destination; and
a job transfer step of distributing and transferring the one or more of the job to the allocation destination in accordance with the job allocation.

8. A program causing a computer to execute control processing including:
a job acquisition step of acquiring, from each of one or more client devices on a client side performing a calculation request for a predetermined job, one or more of the job;
a job allocation step of conducting, as job allocation, processing of defining at least part of a plurality of calculation execution devices as an allocation destination, based on M-types (M is an integer value less than or equal to N) of indicators among N-types (N is an integer value of 2 or more) of predetermined indicators, and allocating the one or more of the job to the allocation destination; and
a job transfer step of distributing and transferring the one or more of the job to the allocation destination in accordance with the job allocation.
